# FASCICULE DE BREVET EUROPEEN

(11) **EP 4 532 300 B1**
(45) Date de publication et mention de la délivrance du brevet: **29.04.2026**
(21) Numéro de dépôt: 23716348.0
(22) Date de dépôt: 22.03.2023
(51) Int. Cl.: B62D 25/20, B60K 1/04

(54) **CAISSE DE VEHICULE AUTOMOBILE COMPORTANT UN CAISSON DE BATTERIE ÉLECTRIQUE DE TRACTION**
KRAFTFAHRZEUGKAROSSERIE MIT EINEM GEHÄUSE FÜR EINE ELEKTRISCHE TRAKTIONSBATTERIE
MOTOR VEHICLE BODY COMPRISING A CASING FOR AN ELECTRIC TRACTION BATTERY

(30) Priorité: 24.05.2022 FR 2204955
(43) Date de publication de la demande: 09.04.2025
(73) Titulaire: Stellantis Auto SAS, 78300 Poissy (FR)
(72) Inventeur: CADET, Stephane, 70110 LES MAGNY (FR)
(74) Mandataire: PSIP
(86) Numéro de dépôt international: PCT/FR2023/050409
(87) Numéro de publication internationale: WO 2023/227836

(56) Documents cités:
- DE-A1- 102011 017 459
- US-A1- 2019 009 662

## Description

La présente invention revendique la priorité de la demande française N° 2204955 déposée le 24.05.2022.

La présente invention concerne une caisse de véhicule automobile comportant un caisson de batterie d'alimentation d'une machine électrique de traction du véhicule, ainsi qu'un véhicule automobile électrique équipé d'une telle caisse.

Un type de véhicule automobile comportant un caisson de batterie d'alimentation d'une machine électrique de traction, présenté notamment par le document DE-A1-102011017459, comporte un plancher d'habitacle recevant en dessous un couvercle inférieur fixé sur son contour, de manière à former entre le plancher et ce couvercle un caisson fermé recevant la batterie. Un joint d'étanchéité disposé entre le contour du couvercle et le plancher forme une étanchéité du caisson protégeant la batterie. Toutefois ce type de caisson formé au milieu du plancher, dans une partie sensiblement plate, présente peu de rigidité. De plus on n'utilise pas toute la largeur du véhicule disponible entre les deux longerons latéraux encadrant le plancher de caisse des véhicules.

Un autre type de véhicule électrique connu, présenté notamment par le document US-A1-20190074494, comporte un caisson comprenant une plaque inférieure refroidie recevant les éléments de batterie posés dessus. La plaque est encadrée de chaque côté par un profilé extrudé en alliage d'aluminium, fixé chacun à un longeron de côté du plancher, présentant une forte résistance mécanique afin de protéger cette batterie contre les chocs latéraux sur le véhicule. Un couvercle est fixé sur le dessus des deux profilés pour fermer le caisson avec une étanchéité, ce caisson étant ensuite fixé sous le véhicule.

On obtient dans ce cas sur les côtés du caisson un cadre périphérique disposé entre les longerons et les éléments de batterie qui réduit la largeur du volume intérieur disponible, et sur le dessus du caisson une tôle du couvercle disposé en dessous de la tôle du plancher, avec un jeu minimum qui peut être d'environ 10mm pour éviter tout risque d'interférences, qui réduit aussi le volume intérieur en hauteur.

Le document US 2019/009662 A1 décrit une caisse de véhicule automobile électrique selon le préambule de la revendication 1.

D'une manière générale les caisses des véhicules automobiles électriques doivent présenter comme pour les autres véhicules une étanchéité à l'eau, et aussi une étanchéité particulière aux fumées qui peuvent être dégagées par la batterie lors d'un dommage causant un emballement thermique afin d'éviter des incidents avec les passagers pouvant être graves.

Les normes actuelles imposent une étanchéité du caisson de batterie à la poussière et à l'eau avec un indice de protection IP67 suivant le standard de la Commission Electronique Internationale (IEC), afin d'éviter toute entrée d'eau dans son enveloppe qui pourrait entraîner un court-circuit des éléments électriques, et toute fuite vers l'extérieur de produits internes de ces batteries.

La réalisation d'un caisson indépendant fixé sous la caisse du véhicule permet de séparer les fonctions d'étanchéité de ce caisson et d'étanchéité de la caisse, présentant des caractéristiques différentes, mais pose des problèmes de limitation du volume intérieur disponible, et du nombre de composants plus important qui augmente la masse du véhicule ainsi que les coûts.

La présente invention a notamment pour but d'éviter ces problèmes de l'art antérieur. Elle propose à cet effet une caisse de véhicule automobile électrique comprenant une tôle de plancher, des longerons, un caisson de batterie disposé sous la tôle de plancher, et sous ce caisson un couvercle de caisson, la tôle de plancher étant fixée de chaque côté à un des longerons, ces longerons présentant une face inférieure sensiblement horizontale, cette caisse de véhicule étant remarquable en ce que les bords de la tôle de plancher se superposent sous les faces inférieures de longerons, la tôle de plancher et les bords de cette tôle présentent une étanchéité de caisse de véhicule étanche à l'eau et aux fumées, et en ce que les côtés du couvercle présentent une face plate se superposant sous les bords de tôle de plancher avec entre eux une étanchéité de caisson de batterie à la poussière et à l'eau.

Un avantage de cette caisse de véhicule est qu'en disposant les bords de tôle de plancher sous la face inférieure des longerons, et les côtés du couvercle en dessous de ces bords, ces bords de tôle de plancher se terminent à l'extérieur du véhicule, et non dans le caisson. On peut donc réaliser entre les bords de tôle de plancher et les longerons l'étanchéité standard prévue pour les caisses de véhicules, qui est simple et économique.

Le caisson est directement formé dans la structure de la caisse du véhicule, les longerons constituant les renforts latéraux nécessaires pour protéger les éléments de la batterie. On évite ainsi l'utilisation d'un cadre périphérique qui prendrait de la place en largeur, et un couvercle supérieur du caisson de batterie qui prendrait de la place en hauteur. On obtient le plus grand volume possible pour disposer les éléments de la batterie, ce qui favorise l'autonomie du véhicule électrique. On réduit aussi le nombre d'éléments de structure ce qui diminue la masse du véhicule et limite les coûts.

La caisse de véhicule électrique selon l'invention peut comporter de plus une ou plusieurs des caractéristiques suivantes, qui peuvent être combinées entre elles. Avantageusement, la tôle de plancher comporte une partie descendante disposée avant chaque bord de tôle de plancher, qui est accolée à une partie sensiblement verticale du côté intérieur du longeron.

Avantageusement, les bords de tôle de plancher sont soudés sous les faces inférieures de longeron.

Avantageusement, les faces inférieures de longeron comportent vers l'extérieur du véhicule un repli vers le bas, l'étanchéité de caisse de véhicule étant appliquée entre l'extrémité du bord de tôle de plancher et le creux formé par ce repli vers le bas. Avantageusement, la face plate des côtés de couvercle est encadrée sur le contour de ce couvercle par des plis de rigidification descendant.

Avantageusement, la face plate des côtés de couvercle est fixée aux longerons par une série de vis traversant successivement cette face plate, le bord de tôle de plancher et la face inférieure de longeron.

Avantageusement, la tôle de plancher comporte des traverses de rigidification directement soudées sous cette tôle.

Dans ce cas, avantageusement les traverses de rigidification comportent des entretoises fixées en-dessous, recevant l'appui du couvercle.

Avantageusement, le couvercle comporte sur sa face supérieure des traverses de renfort alignées sur les entretoises.

L'invention a aussi pour objet un véhicule électrique automobile équipé d'une batterie de traction, remarquable en ce qu'il comporte une caisse de véhicule comprenant l'une quelconque des caractéristiques précédentes, disposant d'éléments de batterie fixés sur le couvercle.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de dessous d'une caisse de véhicule selon l'invention avec son couvercle inférieur du caisson de batterie ;
[Fig. 2] est une vue en coupe transversale d'un côté latéral du caisson de batterie au niveau d'une traverse de renfort ; et
[Fig. 3] est une vue en perspective de ce côté latéral de caisson de batterie.

Dans l'ensemble du document le côté supérieur ou dessus est relatif à un véhicule automobile posé sur un sol plat horizontal, les côtés intérieur ou extérieur sont suivant la direction transversale du véhicule, respectivement tournés vers l'axe central ou vers l'extérieur.

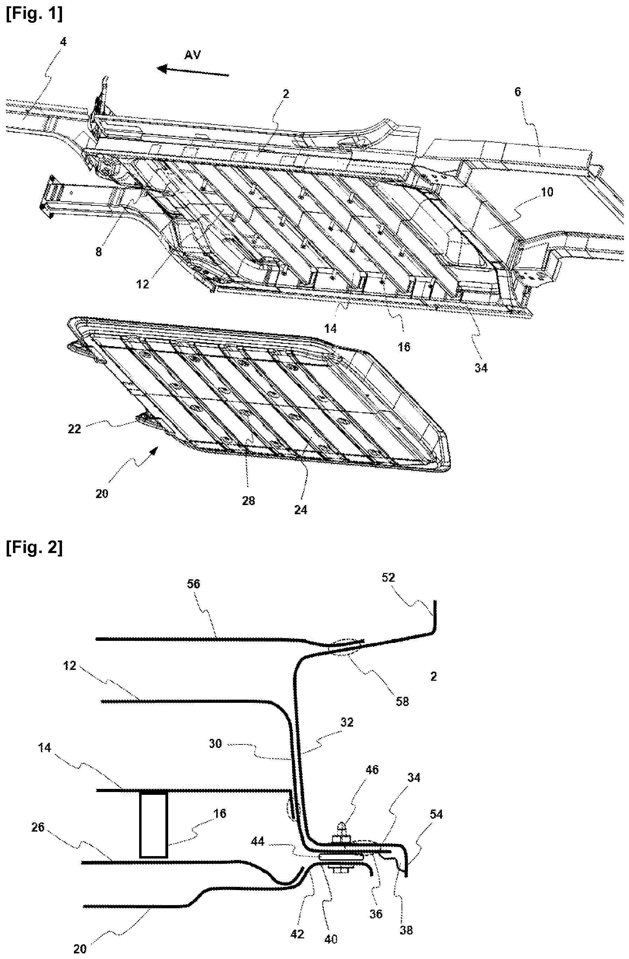

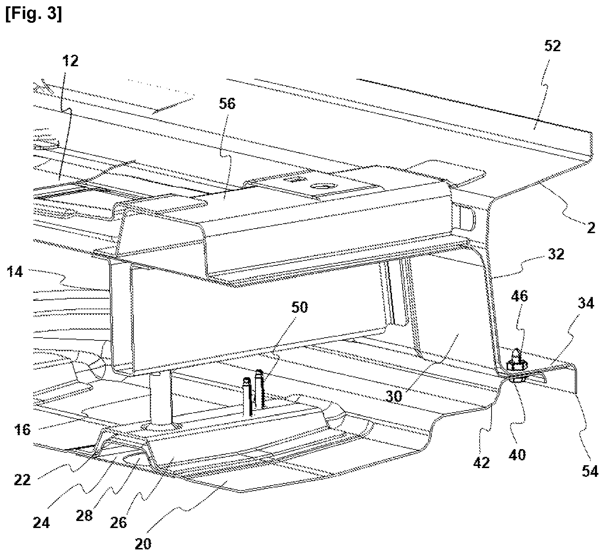

Les figures 1, 2 et 3 présentent la base d'une caisse de véhicule automobile comportant de chaque côté une tôle intérieure de longeron 2, prolongé vers l'avant par un longeron avant 4 et vers l'arrière par un longeron arrière 6. Les tôles de longeron 2 sont reliées vers l'avant par une traverse avant 8 et vers l'arrière par une traverse arrière 10, en formant entre ces quatre éléments un caisson de batterie recouvert par une tôle de plancher 12 sensiblement plate.

Chaque tôle intérieure de longeron 2 comporte une partie supérieure sensiblement horizontale, une partie tournée vers l'intérieur du véhicule sensiblement verticale 32, puis une face inférieure sensiblement horizontale 34. Les bords de la tôle de longeron 2 tournées vers l'extérieur comportent en partie supérieure un repli vers le haut 52 et en partie inférieure un repli vers le bas 54, ces replis recevant par soudure une tôle extérieure de longeron non représentée pour fermer ce longeron.

Les zones de soudure entre les tôles sont indiquées par les marquages en pointillés 58.

La tôle de plancher 12 reçoit des traverses supérieures 56 apportant une rigidité et permettant de fixer des équipements comme les sièges.

La tôle de plancher 12 reçoit quatre traverses inférieures 14 directement soudées sous cette tôle, réparties sur la longueur du caisson de batterie, afin de la renforcer en délimitant des volumes recevant des éléments de la batterie. Chaque traverse inférieure 14 comporte des entretoises verticales 16 dépassant sous le dessous de la traverse, leurs bases formant un plan inférieur.

Le contour de la tôle de plancher 12 présente une partie descendante 30 qui est accolée à la partie sensiblement verticale 32 de la tôle de longeron 2, puis se termine par un bord horizontal 36 en appui sous la face inférieure horizontale de tôle de longeron 34, des soudures par points reliant ces deux parties pour assurer une liaison fortement rigide entre le plancher et les longerons.

L'ensemble de la tôle de plancher présente une étanchéité complète de caisse. Un cordon de mastic d'étanchéité 38 est déposé ensuite à la fois sur le bord de la tôle de plancher 12 et la face inférieure de tôle de longeron 34 dans le creux formé par le repli vers le bas 54. Avec la tôle de plancher ainsi que l'ensemble de son contour formant une étanchéité à l'eau et aux fumées, on ne peut avoir de remontée de fumées venant de la batterie disposée sous la caisse du véhicule en cas d'incident, et sortant de son caisson.

Un couvercle comprenant une tôle principale 20 comporte en dessous de chaque traverse inférieure 14 une nervure transversale 22 dépassant vers le haut, encadrée sur le dessus par une traverse de renfort de couvercle 26, et en dessous par une tôle plate 24. La tôle plate du dessous 24 comporte des perçages de passage d'un outil 28 permettant de visser des vis traversant la tôle de couvercle 20 et la traverse de renfort de couvercle 26, qui sont engagées sous les entretoises 16 pour fixer ce couvercle en dessous.

Les traverses de renfort de couvercle 26 comportent des tiges filetées verticales 50 permettant une fixation des éléments de batterie 56 sur ce couvercle.

Le couvercle 20 présente sur ses côtés une face horizontale plate 40 continue suivant l'ensemble du contour, encadrée par des plis 42 descendant pour lui donner une rigidité. La face plate de côté 40 reçoit un joint d'étanchéité périphérique 44, continue sur le contour, qui est serré sous le bord horizontal de plancher 36 par une série de vis 46 traversant à la fois le couvercle, la tôle de plancher 12 et la face inférieure de tôle de longeron 34.

Le joint d'étanchéité périphérique 44 présente une étanchéité renforcée prévue pour un caisson de batterie, assurant un niveau d'étanchéité à la poussière et à l'eau du type IP67 afin de répondre aux normes de protection des batteries.

On notera qu'avec l'absence d'un couvercle supérieur propre du caisson de batteries, la tôle de plancher 12 assure cette fonction, mais comporte une étanchéité avec le longeron 2 qui est reportée à l'extérieur du caisson grâce à son bord horizontal de tôle 36 dépassant au-delà du couvercle 20 et sortant de ce caisson. On peut ainsi assurer une étanchéité simple habituelle de caisse entre le bord de plancher 36 et la face inférieure de longeron 34 soudés entre eux, qui n'est pas soumise aux contraintes fortes d'étanchéité du caisson.

La mise en place de la batterie ou sa dépose comporte le montage ou le démontage du couvercle inférieur 20, les éléments de batterie étant directement fixés dessus ce qui permet d'accéder de manière simple et rapide à l'ensemble de cette batterie.

On obtient un volume maximum disponible pour la batterie qui va en haut jusqu'à la tôle de plancher de l'habitacle 12, et sur les côtés jusqu'aux longerons 2 grâce à la partie descendante de bord de plancher 30 qui est accolée à la partie verticale de longeron 32.

## Revendications

1. Caisse de véhicule automobile électrique comprenant une tôle de plancher (12), des longerons (2), un caisson de batterie disposé sous la tôle de plancher (12), et sous ce caisson un couvercle de caisson (20), la tôle de plancher (12) étant fixée de chaque côté à un des longerons (2), ces longerons (2) présentant une face inférieure (34) sensiblement horizontale, **caractérisée en ce que** les bords (36) de la tôle de plancher (12) se superposent sous les faces inférieures de longerons (34), la tôle de plancher (12) et ses bords (36) présentent une étanchéité de caisse de véhicule (38) étanche à l'eau et aux fumées, et **en ce que** les côtés du couvercle (20) présentent une face plate (40) se superposant sous les bords de tôle de plancher (36) avec entre eux une étanchéité de caisson de batterie (44) à la poussière et à l'eau.

2. Caisse de véhicule selon la revendication 1, **caractérisée en ce que** la tôle de plancher (12) comporte une partie descendante (30) disposée avant chaque bord de tôle de plancher (36), qui est accolée à une partie sensiblement verticale (32) du côté intérieur du longeron (2).

3. Caisse de véhicule selon la revendication 1 ou 2, **caractérisée en ce que** les bords de tôle de plancher (36) sont soudés sous les faces inférieures de longeron (34).

4. Caisse de véhicule selon la revendication 3, **caractérisée en ce que** les faces inférieures de longeron (34) comportent vers l'extérieur du véhicule un repli vers le bas (54), l'étanchéité de caisse de véhicule (38) étant appliquée entre l'extrémité du bord de tôle de plancher (36) et le creux formé par ce repli vers le bas (54).

5. Caisse de véhicule selon l'une quelconque des revendications précédentes, **caractérisée en ce que** la face plate des côtés de couvercle (40) est encadrée sur le contour de ce couvercle (20) par des plis de rigidification descendant (42).

6. Caisse de véhicule selon l'une quelconque des revendications précédentes, **caractérisée en ce que** la face plate des côtés de couvercle (40) est fixée aux longerons (2) par une série de vis (46) traversant successivement cette face plate, le bord de tôle de plancher (36) et la face inférieure de longeron (34).

7. Caisse de véhicule selon l'une quelconque des revendications précédentes, **caractérisée en ce que** la tôle de plancher (12) comporte des traverses de rigidification (14) directement soudées sous cette tôle.

8. Caisse de véhicule selon la revendication 7, **caractérisée en ce que** les traverses de rigidification (14) comportent des entretoises (16) fixées en-dessous, recevant l'appui du couvercle (20).

9. Caisse de véhicule selon la revendication 8, **caractérisée en ce que** le couvercle (20) comporte sur sa face supérieure des traverses de renfort (26) alignées sur les entretoises (16).

10. Véhicule électrique automobile équipé d'une batterie de traction, **caractérisé en ce qu'**il comporte une caisse de véhicule selon l'une quelconque des revendications précédentes, disposant d'éléments de batterie (56) fixés sur le couvercle (20).

## Patentansprüche

1. Karosseriestruktur für ein elektrisches Kraftfahrzeug, umfassend ein Bodenblech (12), Längsträger (2), einen unter dem Bodenblech (12) angeordneten Batteriekasten sowie unter diesem Batteriekasten einen Kastendeckel (20), wobei das Bodenblech (12) beidseitig an jeweils einem der Längsträger (2) befestigt ist, wobei die Längsträger (2) eine im Wesentlichen horizontale Unterseite (34) aufweisen, **dadurch gekennzeichnet, dass** die Ränder (36) des Bodenblechs (12) sich unter den Unterseiten der Längsträger (34) überlappen, wobei das Bodenblech (12) und seine Ränder (36) eine Fahrzeugkarosserieabdichtung (38) aufweisen, die gegen Wasser und Rauch dicht ist, und dass die Seiten des Deckels (20) eine ebene Fläche (40) aufweisen, die sich unter den Rändern des Bodenblechs (36) überlappt, wobei zwischen diesen eine Batteriekastenabdichtung (44) gegen Staub und Wasser vorgesehen ist.

2. Karosseriestruktur nach Anspruch 1, **dadurch gekennzeichnet, dass** das Bodenblech (12) vor jedem Rand des Bodenblechs (36) einen nach unten verlaufenden Abschnitt (30) aufweist, der an einem im Wesentlichen vertikalen Abschnitt (32) der Innenseite des Längsträgers (2) anliegt.

3. Karosseriestruktur nach Anspruch 1 oder 2, **dadurch gekennzeichnet, dass** die Ränder des Bodenblechs (36) unter den Unterseiten der Längsträger (34) verschweißt sind.

4. Karosseriestruktur nach Anspruch 3, **dadurch gekennzeichnet, dass** die Unterseiten der Längsträger (34) auf der Fahrzeugaußenseite eine nach unten gerichtete Abkantung (54) aufweisen, wobei die Fahrzeugkarosserieabdichtung (38) zwischen dem Ende des Randes des Bodenblechs (36) und der durch diese Abkantung (54) gebildeten Vertiefung angeordnet ist.

5. Karosseriestruktur nach einem der vorhergehenden Ansprüche, **dadurch gekennzeichnet, dass** die ebene Fläche der Deckelseiten (40) entlang des Umfangs des Deckels (20) von nach unten verlaufenden Versteifungsfalten (42) eingerahmt ist.

6. Karosseriestruktur nach einem der vorhergehenden Ansprüche, **dadurch gekennzeichnet, dass** die ebene Fläche der Deckelseiten (40) mittels einer Reihe von Schrauben (46) an den Längsträgern (2) befestigt ist, wobei die Schrauben nacheinander durch diese ebene Fläche, den Rand des Bodenblechs (36) und die Unterseite des Längsträgers (34) hindurchgeführt sind.

7. Karosseriestruktur nach einem der vorhergehenden Ansprüche, **dadurch gekennzeichnet, dass** das Bodenblech (12) Versteifungsquerträger (14) aufweist, die direkt unter diesem Bodenblech verschweißt sind.

8. Karosseriestruktur nach Anspruch 7, **dadurch gekennzeichnet, dass** die Versteifungsquerträger (14) unten befestigte Abstandshalter (16) aufweisen, die die Abstützung des Deckels (20) aufnehmen.

9. Karosseriestruktur nach Anspruch 8, **dadurch gekennzeichnet, dass** der Deckel (20) auf seiner Oberseite Verstärkungsquerträger (26) aufweist, die mit den Abstandshaltern (16) ausgerichtet sind.

10. Elektrisches Kraftfahrzeug mit einer Traktionsbatterie, **dadurch gekennzeichnet, dass** es eine Karosseriestruktur nach einem der vorhergehenden Ansprüche aufweist, wobei Batterieelemente (56) auf dem Deckel (20) befestigt sind.

## Claims

1. Vehicle body structure for an electric motor vehicle comprising a floor panel (12), side members (2), a battery casing arranged below the floor panel (12), and, below this casing, a casing cover (20), the floor panel (12) being fixed on each side to one of the side members (2), said side members (2) having a substantially horizontal lower face (34), **characterized in that** edges (36) of the floor panel (12) overlap beneath the lower faces of the side members (34), the floor panel (12) and its edges (36) providing a vehicle body sealing (38) that is watertight and smoke-tight, and **in that** sides of the cover (20) have a flat face (40) overlapping beneath the edges of the floor panel (36), with a battery casing sealing (44) that is dust-tight and watertight provided therebetween.

2. Vehicle body structure according to claim 1, **characterized in that** the floor panel (12) comprises, upstream of each floor panel edge (36), a downwardly extending portion (30) abutting against a substantially vertical portion (32) of an inner side of the side member (2).

3. Vehicle body structure according to claim 1 or 2, **characterized in that** the edges of the floor panel (36) are welded beneath the lower faces of the side members (34).

4. Vehicle body structure according to claim 3, **characterized in that** the lower faces of the side members (34) comprise, toward an outer side of the vehicle, a downward fold (54), the vehicle body sealing (38) being applied between an end of the floor panel edge (36) and a recess formed by said downward fold (54).

5. Vehicle body structure according to any one of the preceding claims, **characterized in that** the flat face of the cover sides (40) is bordered along a perimeter of said cover (20) by downwardly extending stiffening folds (42).

6. Vehicle body structure according to any one of the preceding claims, **characterized in that** the flat face of the cover sides (40) is fixed to the side members (2) by a series of screws (46) passing successively through said flat face, the floor panel edge (36), and the lower face of the side member (34).

7. Vehicle body structure according to any one of the preceding claims, **characterized in that** the floor panel (12) comprises stiffening cross members (14) directly welded beneath said floor panel.

8. Vehicle body structure according to claim 7, **characterized in that** the stiffening cross members (14) comprise spacers (16) fixed underneath, receiving a support of the cover (20).

9. Vehicle body structure according to claim 8, **characterized in that** the cover (20) comprises, on its upper face, reinforcing cross members (26) aligned with the spacers (16).

10. Electric motor vehicle equipped with a traction battery, **characterized in that** it comprises a vehicle body structure according to any one of the preceding claims, having battery elements (56) fixed on the cover (20).
